# EUROPÄISCHE PATENTSCHRIFT

(11) **EP 1 299 297 B1**
(45) Veröffentlichungstag und Bekanntmachung des Hinweises auf die Patenterteilung: **11.08.2004**
(21) Anmeldenummer: 01949270.1
(22) Anmeldetag: 20.06.2001
(51) Int. Cl.: B65G 47/64, B07C 5/344

(54) **WEICHE ZUM SORTIEREN UND FÜHREN VON TEILEN**
SWITCH FOR SORTING AND GUIDING PARTS
DISPOSITIF DE SEPARATION SERVANT A TRIER ET A ACHEMINER DES PIECES

(30) Priorität: 10.07.2000 DE 10034432
(43) Veröffentlichungstag der Anmeldung: 09.04.2003
(73) Patentinhaber: Demag Ergotech GmbH, 90571 Schwaig (DE)
(72) Erfinder: BERTLEFF, Wolfgang, 91058 Erlangen (DE)
(74) Vertreter: Meissner, Peter E., Dipl.-Ing.
(86) Internationale Anmeldenummer: PCT/DE2001/002291
(87) Internationale Veröffentlichungsnummer: WO 2002/004326

(56) Entgegenhaltungen:
- DE-B- 1 080 481
- DE-U- 29 906 636
- US-A- 5 407 083
- US-A- 5 740 901

## Beschreibung

Die Erfindung betrifft eine Weiche zum Sortieren und Führen von Teilen, insbesondere Werkstücke von Kunststoffen, die parallel zur Hauptachse bewegbare Stangen aufweist, an denen Bahnen angeordnet sind, die je nach vorgebbarer Stellung der Stangen eine Schräge bildend oder eine Öffnung im Zentrum belassend die betroffenen Teile zumindestens in zwei unterschiedliche Aufnahmeelemente führen und ein entsprechendes Verfahren zur Verwendung der Weiche.

Aus DE 299 06 636 U1 ist eine Qualitätsweiche für eine Spritzgießmaschine bekannt, bei der an einer Welle eine schwenkbare Wippe vorgesehen ist, wobei von der Spritzgießmaschine durch eine Trichtermündung einfallende Kunststoffteile je nach Stellung der Wippe zur einen oder zur anderen Seite abgeleitet werden.

Bei dieser Qualitätsweiche sind nur zwei Stellungen möglich, wobei beim Wechsel von der einen zur anderen Stellung stets die komplette Wippe zu bewegen ist.

Aus EP 0 589 543 A2 ist eine Vorrichtung zum Sortieren und im wesentlichen vertikalen Führen von Werkstücken bekannt, bei der ein um eine Horizontalachse drehbarer Rahmen bekannt ist, an dem Bahnen anlenkbar sind, die an Stangen befestigbar sind und soweit straffbar sind, dass sie in Arbeitsstellung oberhalb der zugeordneten Schenkel, an denen Sie nicht befestigt sind, verlaufen und dabei eine mit der Produktionsmaschine in Verbindung stehende Trichtermündung unterfüllen.

Nachteil dieser Sortiervorrichtung ist der relativ große Drehwinkel des Rahmens zur Änderung der jeweiligen Sortierstellung.

Es ist die Aufgabe der Erfindung, eine Weiche zum Sortieren und Führen von Teilen zu schaffen, die mit konstruktiv einfachen Mitteln bei geringfügigen Veränderungen als Zweioder Dreirichtungsvariante ein sicheres Sortieren von insbesondere Kunststoffteilen ermöglicht.

Die Erfindung löst diese Aufgabe durch die Merkmale des Vorrichtungsanspruchs 1.

Erfindungsgemäß weist die Weiche zum Sortieren und Führen von Teilen zueinander achsparallel bewegbare Stangen auf, die mit Führungselementen korrespondieren, durch die sie im wesentlichen horizontal bewegbar sind, wobei Antriebe vorgesehen sind, durch die die Stangen in ihren Längsachsen voneinander unabhängig aufeinander zu- oder voneinander wegbewegbar sind. Die Bahnen, die tuchförmig oder als Teleskopbleche ausgestaltet sind, sind in Abhängigkeit von der Stellung der Stangen in ihrer Länge veränderbar.

Als Antriebe sind Drehmotore, Kolbenzylindereinheiten oder auch Linearmotore vorgesehen.

Während beim Einsatz von Linearmotoren die Stangen exakt horizontal bewegt werden, sind in einer anderen vorteilhaften Ausgestaltung die Antriebsmotore an als Hebel ausgestalteten Führungselementen angeschlossen. In Abhängigkeit von der Länge dieser Hebel bewegen sich die Stangen auf Kreisbogenabschnitten mit relativ geringer vertikaler Änderung während des Positionswechsels. In beiden genannten Ausgestaltungen kann die Weiche zum Sortieren und Führen von Teilen nah an das Abführelement der Produktionsmaschine gebracht werden.

Beim Einsatz von Hebeln und Verwendung eines Drehmotors kann in einer Ausgestaltungsform dieser direkt an die in Schwenklagern gelagerten Wellen befestigt werden. Bei dieser Ausgestaltungsform sind zum Sortieren von zwei Stellungsvarianten nur ein einziger, bei Einsatz von drei Stellungsvarianten insgesamt zwei einfache Drehmotore erforderlich.

In einer besonders vorteilhaften Ausgestaltung ist auch bei dem Einsatz von drei Stellungsvarianten nur ein Motor vorgesehen, der Mitnehmerstifte betätigt, die sich gegen die mit den Stangen verbundenen Hebel anlehnen. Als Gegenkraft gegen die Druckkraft der Mitnehmerstifte sind Federelemente vorgesehen.

Um den Motor nach Verfahren der jeweiligen Hebel in ihre Sortierposition abstellen zu können, ist in einer Ausgestaltung der Erfindung vorgesehen, die Mitnehmerstifte in einer Drehscheibe anzuordnen und an der Drehscheibe Elemente vorzusehen, durch die ihre Schwenkbewegung blockierbar ist. Hierbei kommen Sperrelemente zum Einsatz, deren Federkraft durch das Drehmoment des Antriebsmotors überwindbar ist oder federbelastete Sperrelemente, die durch erregbare Magnete verfahrbar sind oder ein selbsthemmendes Motorgetriebe (z.B. Schneckengetriebemotor).

Die zwei unabhängige oder auch nur eine Schwenkachse aufweisenden Hebelstangeneinheiten sind, um einen Schwenkwinkel α < 80° Grad schwenkbar mit dem Vorteil, dass die jeweilige Sortierposition in kürzester Zeit erreichbar ist.

Während des Führens der Teile in der Sortierstellung, bei der sie seitlich von der Zentralachse der Positionsmaschine weggeführt werden, weist das Band einen relativ flachen Winkel auf, so dass die Teile relativ vorsichtig im wesentlichen vertikal geführt werden. Bereits während der Umstellung in die nächste Sortierposition wird dieser Winkel deutlich steiler, so dass die sich noch auf dem Band befindenden zu sortierende Teile deutlich unterstützt werden, ihre Sortierposition zu erreichen. Dies gilt insbesondere bei Kunststoffteilen, die ggf. an dem Band bei einem relativ flachen Winkel haften.

Die erfindungsgemäße Weiche zum Sortieren und Führen von Werkstücken wie auch das Verfahren erlauben ein dichteres Heranführen an den Werkstückauslauf der Maschinen mit dem positiven Effekt, dass die Fallhöhe verringert und ein Danebenfallen der Werkstücke unwahrscheinlich wird.

Weiterhin wird die Federkraft, die erforderlich ist, um die Teleskopbleche zu bewegen oder die tuchförmigen Bänder zu spannen mindestens in der Phase der Bandverkürzung unterstützend für den jeweiligen Antrieb ausgenutzt.

Ein Beispiel der Erfindung ist in der beigefügten Zeichnung dargelegt. Dabei zeigen die
- Figur 1: Weiche mit Hebeln, die von einem Motor über Mitnehmerstifte angetrieben werden,
- Figur 2: Weiche mit Hebeln und Antrieb über Drehmotore,
- Figur 3: Weiche mit Hebeln und Antrieb über Kolben-Zylinder-Einheit,
- Figur 4: Weiche mit Hebeln und Antrieb über Spindel-Mutter-Einheit,
- Figur 5: Weiche mit Antrieb über Linearmotore.

Sämtliche Figuren zeigen ein Abführelement 12, das Teile T von einer nicht weiter dargestellten Produktionsmaschine 11 einer verschiedene Bahnen 51 aufweisenden Weiche zuführt. Je nach Stellung der Weiche sortiert diese die Teile in einen zentralen Behälter 13 oder einen ersten oder zweiten äußeren Behälter 14, 15.

Die einzelnen Weichen weisen dabei Stangen 21, 31 auf, die mit Bahnen 51 verbunden sind, welche anderenends mit Umlenkrollen 71, 72 in Verbindung stehen.

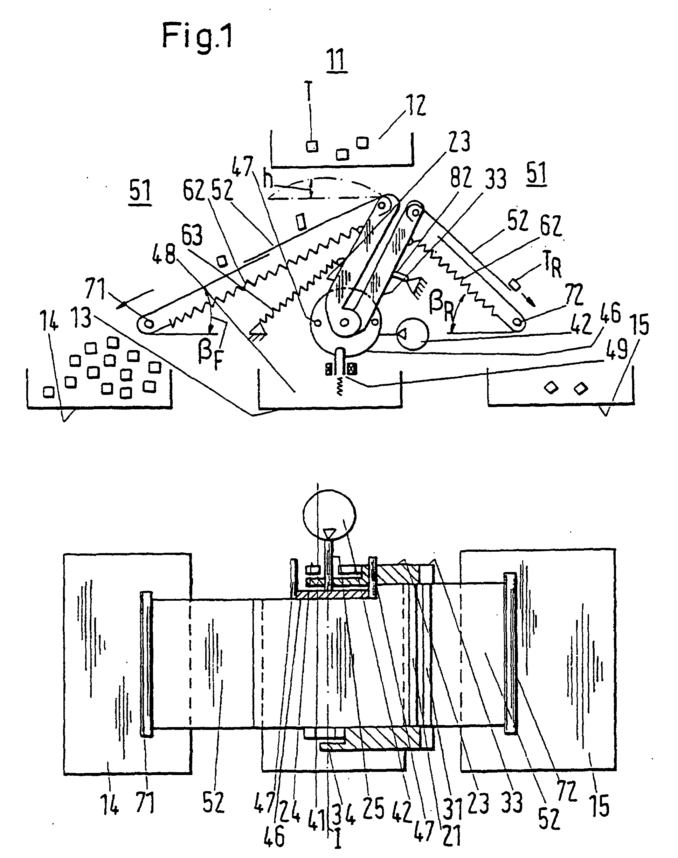

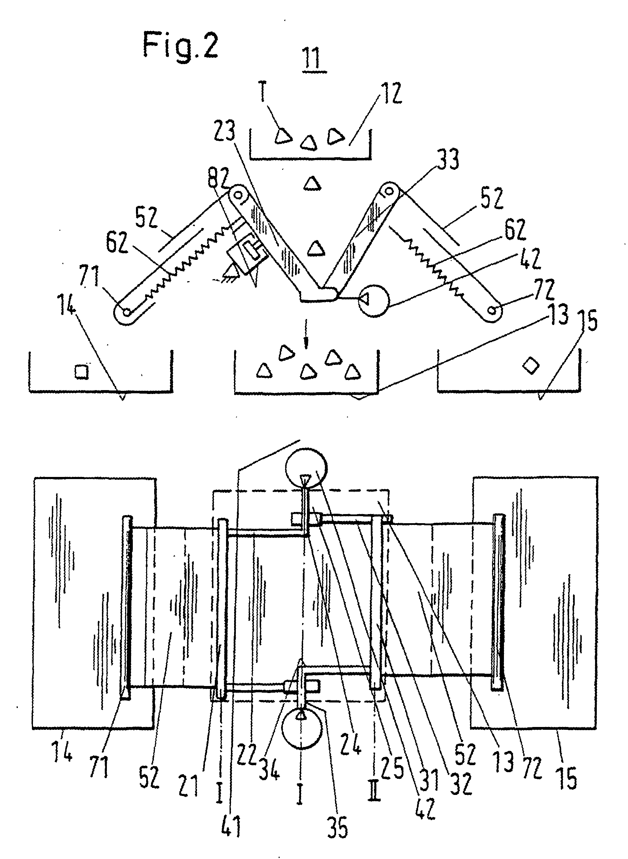

In den Figuren 1 und 2 sind die Bahnen 51 als Teleskopbleche 52 ausgestaltet, an denen Federn 62 ausgestattet sind.

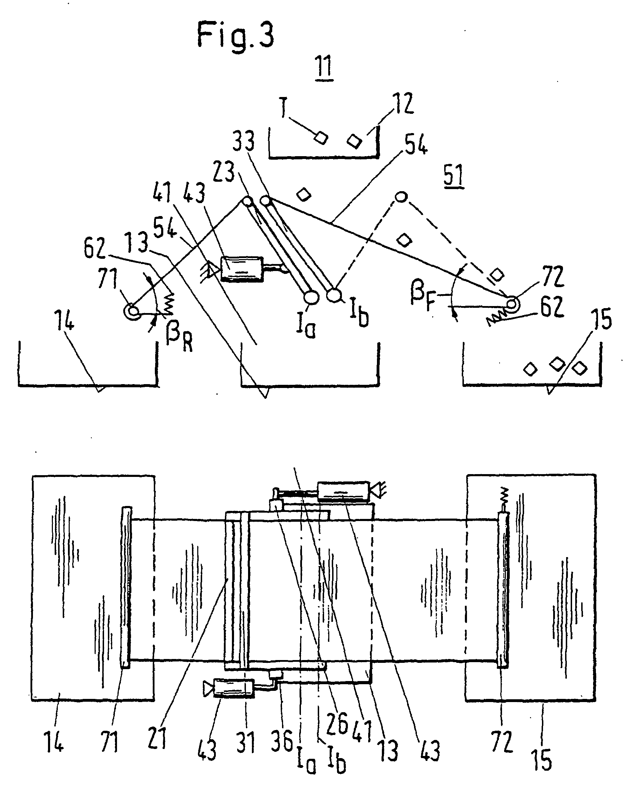

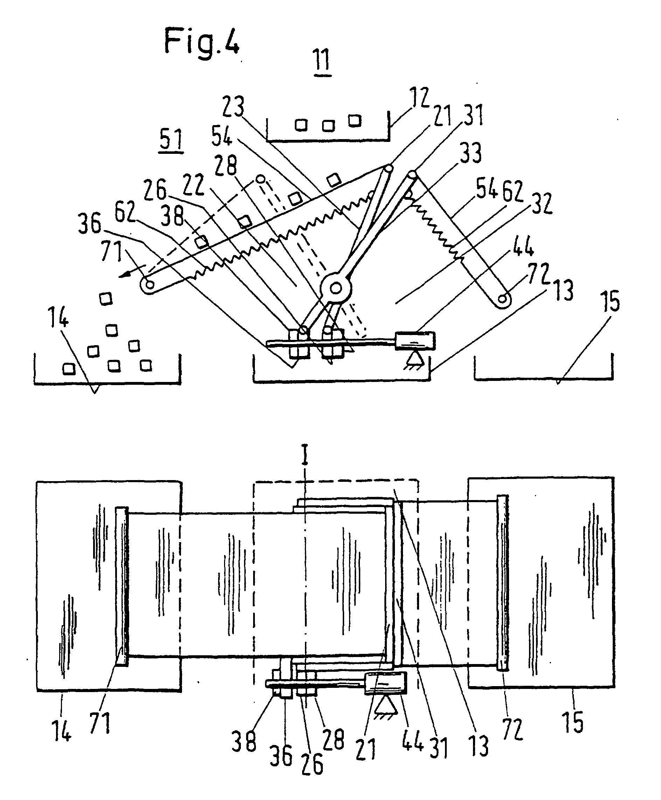

In den Figuren 3 und 4 sind die Bahnen 51 als textilartige Bänder 54 ausgestaltet, die mit Federn 62 zur Straffung der Bänder in Verbindung stehen.

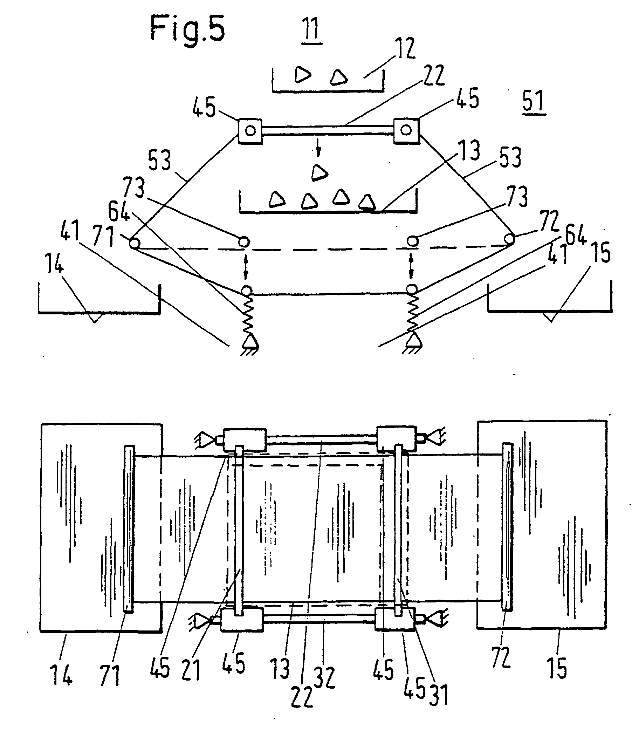

In der Figur 5 ist als Bahn 51 ein durchgehendes Band 58 vorgesehen, welches über mit Federn 74 verbundene Spannrollen 73 straffbar ist.

In der Figur 1 sind die Führungselemente als Hebel 23, 33 ausgebildet, die um eine gemeinsame Schwenkachse I schwenkbar sind. Als Antrieb 41 ist ein Drehmotor vorgesehen, der über eine Welle 25 eine Drehscheibe 46 antreibt. An der Drehscheibe 46 sind Mitnahmestifte 47 vorgesehen, die sich bei der Drehung durch den Drehmotor 42 gegen den jeweiligen Hebel 23 oder 33 lehnen. Der Drehmotor 42 hat dabei die von den Federn 62 bei Einsatz von Teleskopblechen 52 und ggf. von mit den Hebeln 23, 33 verbundenen Federn 63 zu überwinden. In der Endstellung lehnt sich der Hebel gegen einen Prellbock 82.

Die in der Figur 1 dargestellte Weiche zeigt eine Stellung, in der Teile T von dem Abführelement 12 einem äußeren Behälter 14 über eine Bahn 51 zugeführt werden. Diese aktuell in dem Betrieb befindliche Bahn 51 weist einen Steigungswinkel β_{F} auf, der im Vergleich zum ruhenden Band (hier das Teleskopblech 52) flacher ist als der entsprechende Winkel β_{R}. Auf dem ruhenden Teleskopblech 52 wird, bedingt durch den steileren Winkel, ein Restteil T_{R} von der vorangegangenen Sortierstellung endgültig in den äußeren Behälter 15 befördert.

In der Endstellung der Hebel wird dieser entweder durch den in Betrieb befindlichen Drehmotor 42 über ein Mitnehmerstift 47 in seiner Endlage gehalten. In der Figur 1 weist die Drehscheibe 46 ein Sperrelement 48 auf, hier ein federbelasteter Arretierstift 49.

Weiterhin ist die Höhe der Sehne h dargestellt, die den Abstand aufzeigt zwischen der horizontalen Linie und dem Kreisabschnitt der von den Stangen 21, 31 beschriebenen Bahn während des Schwenkvorganges um die Schwenkachse I.

In der Figur 2 ist jeder der um eine gemeinsame Schwenkachse I schwenkbarer Hebel 23, 33 mit einem Drehmotor 42 über eine Welle 25, 36 verbunden.

Die in der Figur 2 dargestellte Weiche befindet sich in der Position, dass beide Hebel 23 und 33 geöffnet sind und die zu sortierenden Teile unmittelbar von der Produktionsmaschine 11 über das Abführelement 12 in den zentralen Behälter 13 gefördert werden können.

In der Figur 3 sind die Stangen 21, 31 mit Hebeln 23, 33 versehen, die über parallele Schwenkachsen Iₐ und I_{b} schwenkbar sind. Als Antriebe 41 sind die Antriebe 41 als Kolben-Zylinder-Einheiten 43 ausgebildet, die über Gelenke 26, 36 mit den Hebeln 23, 33 verbunden sind.

Im vorliegenden Fall weist die im rechten Teil des Bildes als textilartiges Band 54 ausgestaltete Bahn 51 den Steigungswinkel β_{F} auf, der kleiner ist als der Schwenkwinkel β_{R} der sich in Ruhe befindenen Bahn auf der gegenüberliegenden Seite.

In der Figur 4 sind die Führungselemente 22, 32 als zweiarmige Hebel 23, 33 ausgestaltet. An den den Stangen 21, 31 gegenüberliegenden Enden sind Gelenke 26, 36 angeordnet, die Muttern 27, 37 aufweisen, welche mit einer Spindelmuttereinheit 44 in Verbindung stehen.

Im vorliegenden Fall ist eine einzige Spindelmuttereinheit 44 vorgesehen. Zum Betätigen der einzelnen Hebel 23, 33 sind die Muttern über Kupplungen 28, 38 zu- bzw. abschaltbar.

In der Figur 5 weisen die Stangen 21, 31 beidendig Linearmotore 45 auf, die mit stangenförmigen Führungselementen 22, 32 in Verbindung stehen.

Als Bahn 51 ist ein durchgehendes Band 53 vorgesehen, welches unterhalb des zentralen Behälters 13 durchgeführt wird und entsprechend der Stellung der Stangen 21, 31 über Spannrollen 73 spannbar ist. Die Spannrollen 73 sind im vorliegenden Fall mit Federn 64 verbunden.

## Patentansprüche

1. Weiche zum Sortieren und Führen von Teilen, insbesondere Werkstücke von Kunststoffen, die zueinander achsparallel bewegbare Stangen aufweist, an denen Bahnen angeordnet sind, die je nach vorgebbarer Stellung der Stangen, entweder eine Schräge bildend oder eine Öffnung im Zentrum belassend, die betroffenen Teile zumindestens in zwei unterschiedliche Aufnahmeelemente führen,
**dadurch gekennzeichnet,**
**dass** die Stangen (21, 31) mit Führungselementen (22, 32) korrespondieren, durch die sie im wesentlichen horizontal bewegbar sind,
**dass** Antriebe (41) vorgesehen sind, durch die die Stangen (21, 31) in ihren Längsachsen (I, II) voneinander unabhängig aufeinander zu- oder voneinander wegbewegbar sind, und
**dass** die Bahnen (51) in Abhängigkeit von der Stellung der Stangen (21, 31) in ihrer Länge veränderbar sind.

2. Weiche nach Anspruch 1,
**dadurch gekennzeichnet,**
**dass** als Führungselemente (22, 32) Hebel (23, 33) vorgesehen sind, die an den Enden der Stangen (21, 31) befestigt sind,
**dass** die Hebel (23, 33) an dem den Stangen (21, 31) entfernten Ende Schwenklager (24, 34) aufweisen, in denen sie schwenkbar gelagert sind, und
**dass** mindestens einer der mit einer Stange (21, 31) verbundenen Hebel (23, 33) mit einem Antrieb (41) in Verbindung steht.

3. Weiche nach Anspruch 2,
**dadurch gekennzeichnet,**
**dass** als Antrieb (41) ein Drehmotor (42) vorgesehen ist, mit dem die in den Schwenklagern (24, 34) gelagerten Wellen (25, 35) verbunden sind.

4. Weiche nach Anspruch 2,
**dadurch gekennzeichnet,**
**dass** als Antrieb (41) ein Drehmotor (42) vorgesehen ist, durch den über an den Hebeln (23, 33) anlehnbare Mitnehmerstifte (47) diese schwenkbar sind, und
**dass** an den Hebeln (23, 33) Zugelemente (61) vorgesehen sind, die der Druckkraft der Mitnehmerstifte (47) entgegenwirken.

5. Weiche nach Anspruch 2,
**dadurch gekennzeichnet,**
**dass** als Antrieb (41) Kolben-Zylinder-Einheiten (43) vorgesehen sind, die mit einem an mindestens an einem Hebel (23, 33) angebrachten Gelenk (26, 36) verbunden sind.

6. Weiche nach Anspruch 2,
**dadurch gekennzeichnet,**
**dass** als Antrieb (41) eine Spindel-Mutter- Einheit (44) vorgesehen ist, die mit mindestens an einem Hebel (23, 33) angebrachten Gelenk (26, 36) verbunden ist, und
**dass** in den Gelenken (26, 36) die Muttern (27, 37) angeordnet sind.

7. Weiche nach den Ansprüchen 5 oder 6,
**dadurch gekennzeichnet,**
**dass** an den Gelenken (26, 36) schaltbare Kupplungen (28, 38) angeordnet sind.

8. Weiche nach einem der vorgenannten Ansprüche,
**dadurch gekennzeichnet,**
**dass** die Führungselemente (22, 32) stabförmig sind, die mit als Linearmotore (45) ausgebildeten Antrieben (41) korrespondieren, die an den Enden der Stangen (21, 31) befestigt sind.

9. Weiche nach Anspruch 1,
**dadurch gekennzeichnet,**
**dass** die Bahnen (51) teleskopförmig zueinander verschiebbare Bleche sind.

10. Weiche nach Anspruch 9,
**dadurch gekennzeichnet,**
**dass** die teleskopförmig zueinander bewegbaren Bleche (52) über Federn (62) miteinander verbunden sind.

11. Weiche nach Anspruch 4 und 10,
**dadurch gekennzeichnet,**
**dass** die an den Hebeln (23, 33) angebrachten Zugelemente (61) Federn (62) sind, die bei Einsatz von Teleskopblechen (52) zum teleskopartigen Verschieben dieser gleichzeitig Verwendung finden.

12. Weiche nach Anspruch 1,
**dadurch gekennzeichnet,**
**dass** die Bahnen (51) aus einem durchgehenden Band (53) bestehen, welches von mindestens zwei Umlenkrollen (71, 72) umgelenkt wird, und
**dass** mindestens eine Spannrolle (73) vorgesehen ist, durch die das Band (53) spannbar ist.

13. Weiche nach Anspruch 2,
**dadurch gekennzeichnet,**
**dass** die Hebel (23, 33) um einen Schwenkwinkel α < 80 Grad schwenkbar sind.

14. Weiche nach Anspruch 4,
**dadurch gekennzeichnet,**
**dass** die Mitnehmerstifte (47) an einer Drehscheibe (46) angeordnet sind, und
**dass** die Drehscheibe (46) mit einem Sperrelement (48) in ihrer Schwenkbewegung blockierbar ist.

15. Weiche nach Anspruch 14,
**dadurch gekennzeichnet,**
**dass** das Sperrelement (48) ein federbelasteter Arretierstift (49) ist.

16. Weiche nach einem der vorhergehenden Ansprüche,
**dadurch gekennzeichnet,**
**dass** die die Teile führende Bahn in einem flacheren Steigungswinkel (β_{F}) eingestellt ist als der Steigungswinkel (β_{R}) der ruhenden Bahn.

17. Weiche nach Anspruch 16,
**dadurch gekennzeichnet,**
**dass** sich der Steigungswinkel (β_{F}) der die Teile führenden Bahn zu dem Steigungswinkel (β_{R}) der ruhenden Bahn verhält wie β_{F} = 0,7 bis 0,9 x β_{R}.

## Claims

1. Distributing guide for sorting and guiding parts, in particular workpieces of plastic materials, which guide has rods which are movable relative to each other on parallel axes and on which rods tracks are disposed which, according to a prescribable position of the rods, either forming a diagonal or leaving an opening in the centre, guide the relevant parts at least into two different receiving elements,
**characterised in that**
the rods (21, 31) correspond to guide elements (22, 32) by means of which they are essentially horizontally movable,
**in that** drives (41) are provided, by means of which the rods (21, 31) are movable towards each other or away from each other in their longitudinal axes (I, II) independently of each other, and
**in that** the tracks (51) are changeable in their length dependent upon the position of the rods (21, 31).

2. Distributing guide according to claim 1,
**characterised in that**
levers (23, 33) are provided as guide elements (22, 32) which are mounted on the ends of the rods (21, 31),
**in that** the levers (23, 33) have pivot bearings (24, 34) on the end which is remote from the rods (21, 31), in which bearings they are mounted pivotably, and
**in that** at least one of the levers (23, 33), which is connected to a rod (21, 31), is connected to a drive (41)

3. Distributing guide according to claim 2,
**characterised in that**
a rotary motor (42) is provided as drive (41), to which the shafts (25, 35), which are mounted in the pivot bearings (24, 34), are connected.

4. Distributing guide according to claim 2,
**characterised in that**
a rotary motor (42) is provided as drive (41), by means of which, via driving pins (47) which can be applied against the levers (23, 33), said driving pins are pivotable, and
**in that** tensioning elements (61) are provided on the levers (23, 33), which tensioning elements counteract the pressure force of the driving pins (47).

5. Distributing guide according to claim 2,
**characterised in that**
piston-cylinder units (43) are provided as drive (41), which are connected to an articulation (26, 36) which is attached at least to one lever (23, 33).

6. Distributing guide according to claim 2,
**characterised in that**
a spindle-nut unit (44) is provided as drive (41), which is connected to an articulation (26, 36) which is attached at least to one lever (23, 33), and
**in that** the nuts (27, 37) are disposed in the articulations (26, 36).

7. Distributing guide according to claims 5 or 6,
**characterised in that**
connectable couplings (28, 38) are disposed on the articulations (26, 36).

8. Distributing guide according to one of the aforementioned claims,
**characterised in that**
the guide elements (22, 32) are rod-shaped and correspond to drives (41), which are configured as linear motors (45) and are mounted on the ends of the rods (21, 31).

9. Distributing guide according to claim 1,
**characterised in that**
the tracks (51) are metal sheets which are displaceable relative to each other in a telescopic manner.

10. Distributing guide according to claim 9,
**characterised in that**
the metal sheets (52), which are movable relative to each other in a telescopic manner, are connected to each other via springs (62).

11. Distributing guide according to claim 4 and 10,
**characterised in that**
the tensioning elements (61) attached to the levers (23, 33) are springs (62) which are used at the same time when using telescopic metal sheets (52) for telescope-like displacement of the latter.

12. Distributing guide according to claim 1,
**characterised in that**
the tracks (51) comprise a continuous belt (53) which is deflected by at least two deflection rollers (71, 72) and
**in that** at least one tensioning roller (73) is provided, by means of which the belt (53) can be tensioned.

13. Distributing guide according to claim 2,
**characterised in that**
the levers (23, 33) are pivotable about an angle of pivot a < 80 degrees.

14. Distributing guide according to claim 4,
**characterised in that**
the driving pins (47) are disposed on a rotary disc (46), and
**in that** the rotary disc (46) can be locked in its pivoting movement by a locking element (48).

15. Distributing guide according to claim 14,
**characterised in that**
the locking element (48) is a spring-loaded retention pin (49).

16. Distributing guide according to one of the preceding claims,
**characterised in that**
the track guiding the parts is set at a flatter angle of inclination (β_{F}) than the angle of inclination (β_{R}) of the stationary track.

17. Distributing guide according to claim 16,
**characterised in that**
the angle of inclination (β_{F}) of the track guiding the parts relative to the angle of inclination (β_{R}) of the stationary track is in the ratio β_{F} = 0.7 to 0.9 x β_{R}.

## Revendications

1. Dispositif d'aiguillage destiné au tri et au guidage de pièces, notamment de pièces en matière plastique, comportant des barres pouvant être déplacées l'une par rapport à l'autre parallèlement à l'axe, sur lesquelles sont disposées des voies qui, en fonction de la position pouvant être prédéterminée des barres, soit forment un plan incliné, soit laissent subsister une ouverture au centre, guident les pièces concernées vers au moins deux éléments de réception différents,
**caractérisé en ce que** les barres (21, 31) sont en correspondance avec des éléments de guidage (22, 32), par l'intermédiaire desquels elles peuvent être déplacées sensiblement à l'horizontale, **en ce que** des entraînements (41) sont prévus, par l'intermédiaire desquels les barres (21, 31) peuvent être déplacées indépendamment l'une vers l'autre et écartées l'une de l'autre selon leurs axes longitudinaux (I, II), et **en ce que** la longueur des voies (51) peut être modifiée en fonction de la position des barres (21, 31).

2. Dispositif d'aiguillage selon la revendication 1,
**caractérisé en ce que** des leviers (23, 33), qui sont fixés sur les extrémités des barres (21, 31), sont prévus en tant qu'éléments de guidage (22, 32), **en ce que** les leviers (23, 33) comportent des paliers pivotants (24, 34) sur les extrémités éloignées des barres (21, 31), dans lesquels ils sont montés de façon à pouvoir pivoter, et **en ce qu'**au moins l'un des leviers (23, 33) reliés aux barres (21, 31) est en liaison avec un entraînement (41).

3. Dispositif d'aiguillage selon la revendication 2,
**caractérisé en ce qu'**un moteur rotatif (42) est prévu en tant qu'entraînement (41), auquel sont reliés les arbres (25, 35) montés dans les paliers pivotants (24, 34).

4. Dispositif d'aiguillage selon la revendication 2,
**caractérisé en ce qu'**un moteur rotatif (42) est prévu en tant qu'entraînement (41), par l'intermédiaire duquel des broches d'entraînement (47) pouvant s'appliquer contre les leviers (23, 33) peuvent pivoter, et **en ce que** des éléments de traction (61), qui s'opposent à la force de pression des broches d'entraînement (47), sont prévus sur les leviers (23, 33).

5. Dispositif d'aiguillage selon la revendication 2,
**caractérisé en ce que** des unités à piston et cylindre (43) sont prévues en tant qu'entraînement (41), qui sont reliées à une articulation (26, 36) fixée sur au moins un levier (23, 33).

6. Dispositif d'aiguillage selon la revendication 2,
**caractérisé en ce qu'**une unité à broches et écrous (44) est prévue en tant qu'entraînement (41), qui est reliée à une articulation (26, 36) fixée sur au moins un levier (23, 33), et **en ce que** les écrous (27, 37) sont disposés dans les articulations (26, 36).

7. Dispositif d'aiguillage selon les revendications 5 ou 6,
**caractérisé en ce que** des accouplements commutables (28, 38) sont agencés sur les articulations (26, 36).

8. Dispositif d'aiguillage selon l'une quelconque des revendications précédentes,
**caractérisé en ce que** les éléments de guidage (22, 32) ont la forme de barres, qui coopèrent avec des entraînements (41) réalisés sous la forme de moteurs linéaires (45) qui sont fixés sur les extrémités des barres (21, 31).

9. Dispositif d'aiguillage selon la revendication 1,
**caractérisé en ce que** les voies (51) sont des tôles pouvant être déplacées de façon télescopique les unes par rapport aux autres.

10. Dispositif d'aiguillage selon la revendication 9,
**caractérisé en ce que** les tôles (52) pouvant être déplacées de façon télescopique les unes par rapport aux autres sont reliées entre elles par des ressorts (62).

11. Dispositif d'aiguillage selon les revendications 4 et 10,
**caractérisé en ce que** les éléments de traction (61) fixés sur les leviers (23, 33) sont des ressorts (62) qui, lors de l'utilisation de tôles télescopiques (52), sont simultanément employés pour le déplacement de type télescopique de celles-ci.

12. Dispositif d'aiguillage selon la revendication 1,
**caractérisé en ce que** les voies (51) sont constituées d'une bande continue (53) qui est renvoyée par au moins deux poulies de renvoi (71, 72), et **en ce qu'**il est prévu au moins une poulie de tension (73), par l'intermédiaire de laquelle la bande (53) peut être tendue.

13. Dispositif d'aiguillage selon la revendication 2,
**caractérisé en ce que** les leviers (23, 33) peuvent pivoter autour d'un angle de pivotement α < 80 degrés.

14. Dispositif d'aiguillage selon la revendication 4,
**caractérisé en ce que** les broches d'entraînement (47) sont disposées sur un disque rotatif (46) et **en ce que** le mouvement de rotation du disque rotatif (46) peut être bloqué par un élément de blocage (48).

15. Dispositif d'aiguillage selon la revendication 14,
**caractérisé en ce que** l'élément de blocage (48) est une broche de blocage (49) chargée par un ressort.

16. Dispositif d'aiguillage selon l'une quelconque des revendications précédentes,
**caractérisé en ce que** la voie guidant les pièces est réglée suivant un angle de pente (β_{F}) plus plat que l'angle de pente (β_{R}) de la voie au repos.

17. Dispositif d'aiguillage selon la revendication 16,
**caractérisé en ce que**, par rapport à l'angle de pente (β_{R}) de la voie au repos, l'angle de pente (β_{F}) de la voie guidant les pièces est de β_{F} = 0,7 à 0,9 x β_{R}.
